# EUROPEAN PATENT APPLICATION

(11) **EP 4 484 261 A1**
(43) Date of publication of application: **01.01.2025**
(21) Application number: 24183069.4
(22) Date of filing: 19.06.2024
(51) Int. Cl.: B62D 25/20

(54) **FRAME FOR A MOTOR VEHICLE**

(30) Priority: 26.06.2023 IT 202300013173
(71) Applicant: FERRARI S.p.A., 41100 Modena (IT)
(72) Inventor: TESTA, Daniele, 41100 MODENA (IT); MUCI, Roberto Fulvio, 41100 MODENA (IT); PAI SRINGERI, Sunil, 41100 MODENA (IT)
(74) Representative: Studio Torta S.p.A.

(57) **Abstract**

A frame (100) for a motor vehicle (1) includes a body cell (2), a front suspension attachment structure (12), an engine compartment structure (502) comprising a lower portion (503) and an upper portion (504), a rear suspension attachment structure (505), a front absorption element (16), a rear absorption element (516), wherein the front absorption element (16) and the rear absorption element (516) comprise aluminium, the front suspension attachment structure (12) and the rear suspension attachment structure (505) comprise aluminium, the lower portion (503) comprises aluminium and the upper portion (504) comprises carbon fibre, wherein the body cell (2) comprises a carbon fibre shell (310) and at least two first walls (311, 312) facing one another so as to define a cavity (313) between the first walls (311, 312) and one or more carbon fibre partitions (324), arranged inside the cavity (313) and extending transversely to the first walls (311, 312) between two ends respectively connected to the first walls (311, 312) seamlessly.

## Description

### CROSS-REFERENCE TO RELATED APPLICATIONS

This patent application claims priority from Italian patent application no. 102023000013173 filed on June 26, 2023, the entire disclosure of which is incorporated herein by reference.

### TECHNICAL FIELD

The invention relates to a frame for a motor vehicle, in particular a sports motor vehicle.

### PRIOR ART

As it is known, the frame of a motor vehicle has both a supporting function for supporting body elements, i.e. external covering sheet metal, such as the bumper or hood or various connecting brackets, and a shock absorption function.

For this reason, the frame must comprise a plurality of portions, some of them being more suitable for the support function, for which they must have high stiffness and strength characteristics, and others being more suitable for the absorption function, for which they must have high deformability characteristics.

In addition, the frame normally comprises a body cell, which internally defines a passenger compartment to accommodate at least one driver and possible passengers.

For safety reasons, the cell must be particularly stiff and resistant, so as not to crumple on the guests in the passenger compartment in the event of an accident.

Taking all these features into account, the need to improve known frames is particularly felt.

More in particular, by way of example, frames need to be improved in terms of overall lightness, as well as, if necessary, in terms of an ideal spatial distribution of the components, so that the available volumes are sufficient for the allocation of all the devices necessary or advantageous for the operation of the motor vehicle, however without compromising or even just jeopardizing the support and absorption functions of the frame.

Furthermore, in the same context, there is also a need to efficiently and effectively integrate the functions of the frame from the point of view of the overall dimensions with the functions of the typical devices of motor vehicles used to convey external air to specific parts of the relative motor vehicle, such as, for example, channels for conveying cooling air to the brakes or the passenger compartment air conditioning device.

In addition, the frame needs to be designed so as to find a good compromise in limiting an increase in the extension of the portions used for the absorption function, while increasing their capacity in the progressiveness of shock absorption or in reducing the deceleration of the vehicle due to the impact.

An object of the invention is to fulfil at least one of the needs discussed above, preferably in a simple and reliable fashion.

### DESCRIPTION OF THE INVENTION

Said object is reached by a frame for a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising a frame according to the invention,
- figure 2 is a perspective view of the motor vehicle from a lateral point of view,
- figure 3 is a schematic perspective view of the frame,

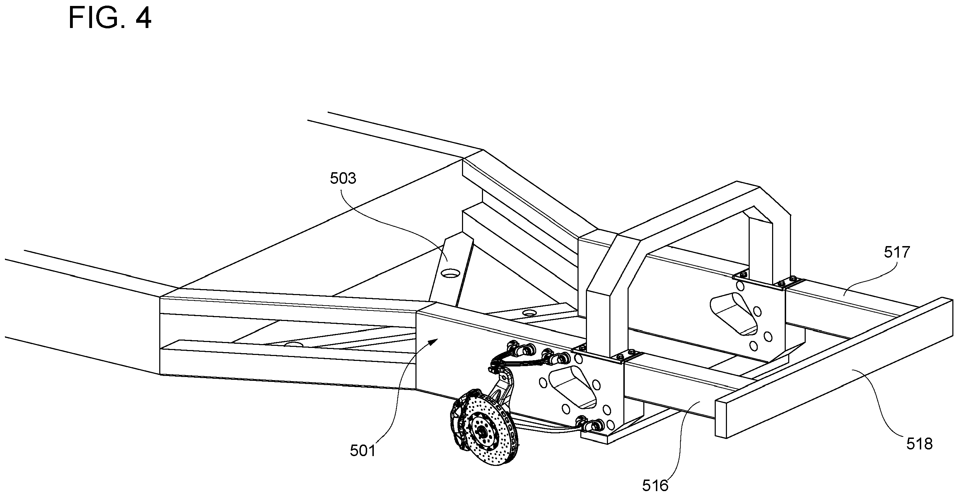

- figure 4 is a schematic perspective view, on a larger scale, of a rear portion of the frame,

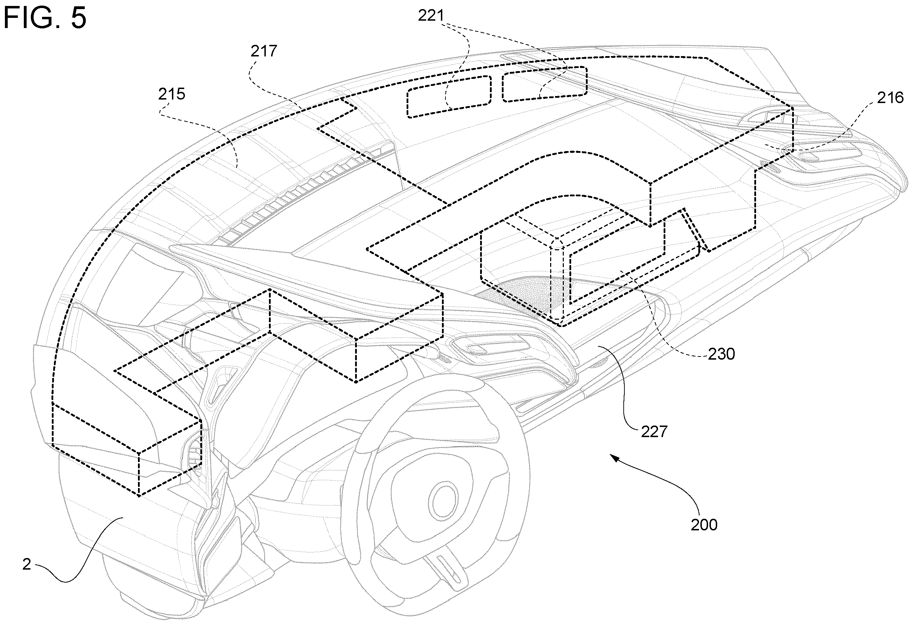

- figure 5 is a perspective view of the motor vehicle from the inside of a passenger compartment thereof,

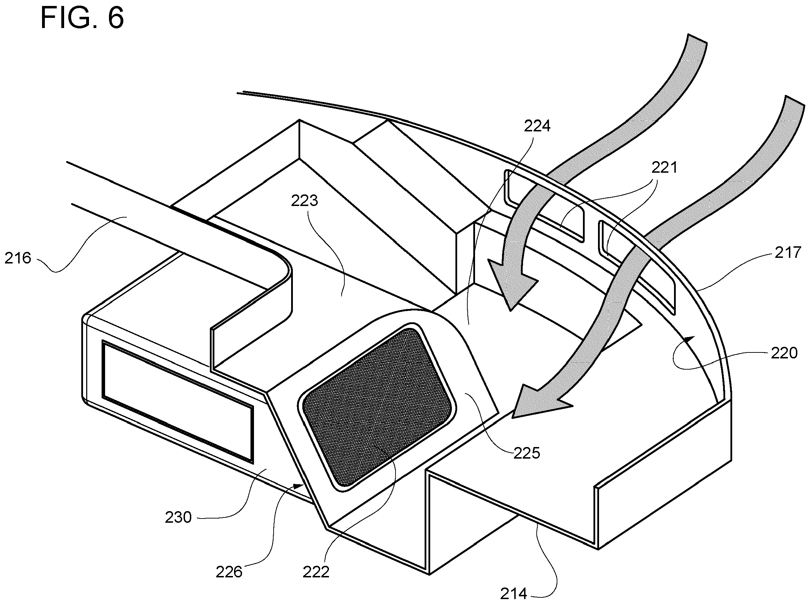

- figure 6 is a perspective view of a front portion of a body cell of the frame, with parts removed for greater clarity,

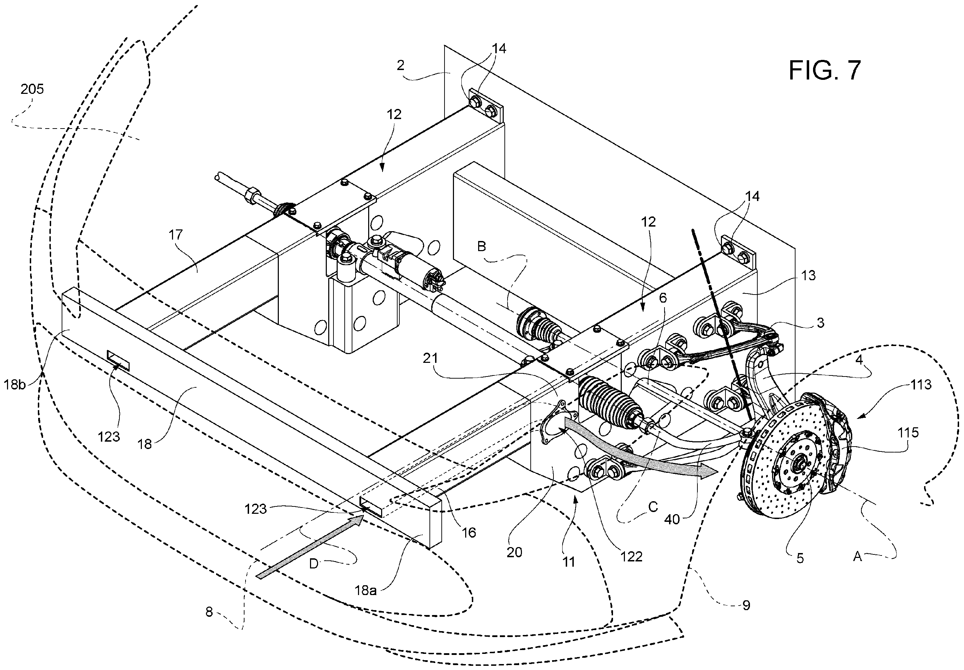

- figure 7 is a schematic perspective view of a front portion of the frame;

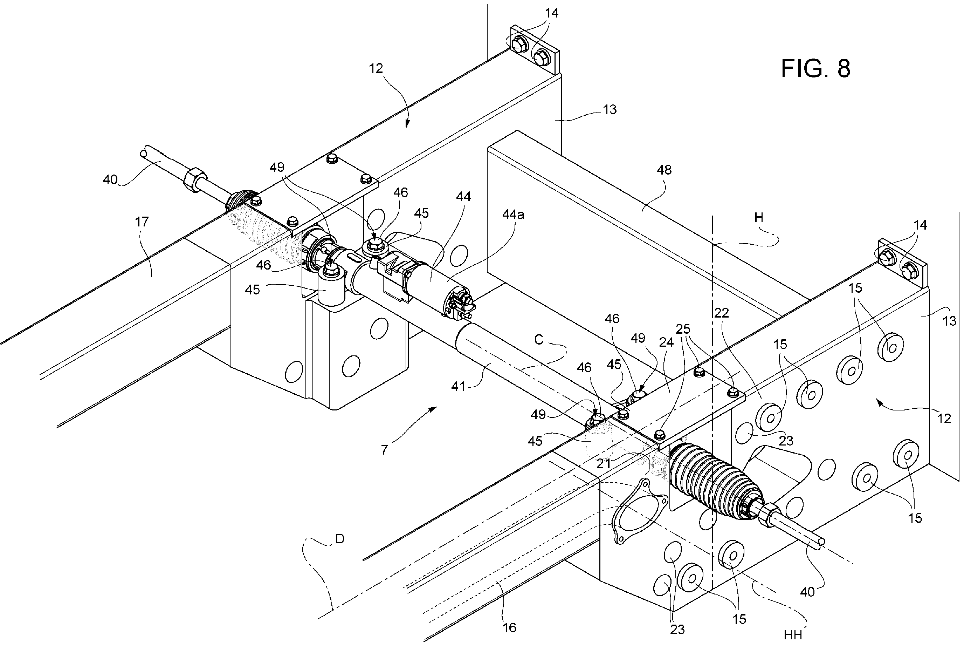

- figure 8 is an enlargement of figure 7, with some components removed for greater clarity,

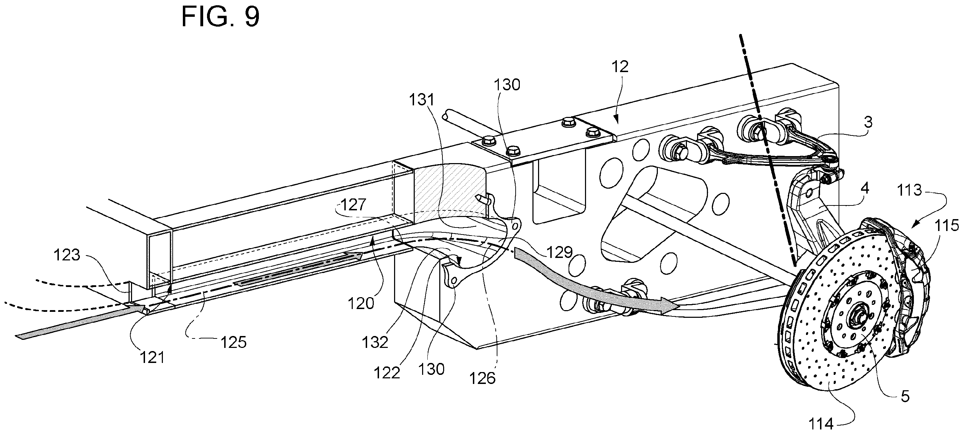

- figure 9 is a perspective view, on a larger scale, of a channel extending through the front portion of figure 7,

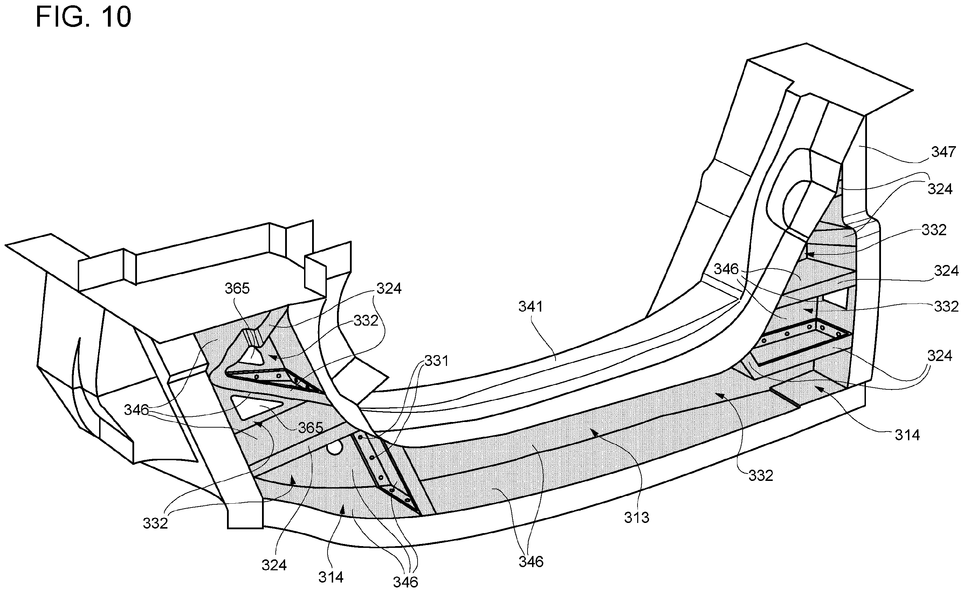

- figure 10 is a perspective view showing a step of a method for manufacturing the body cell,

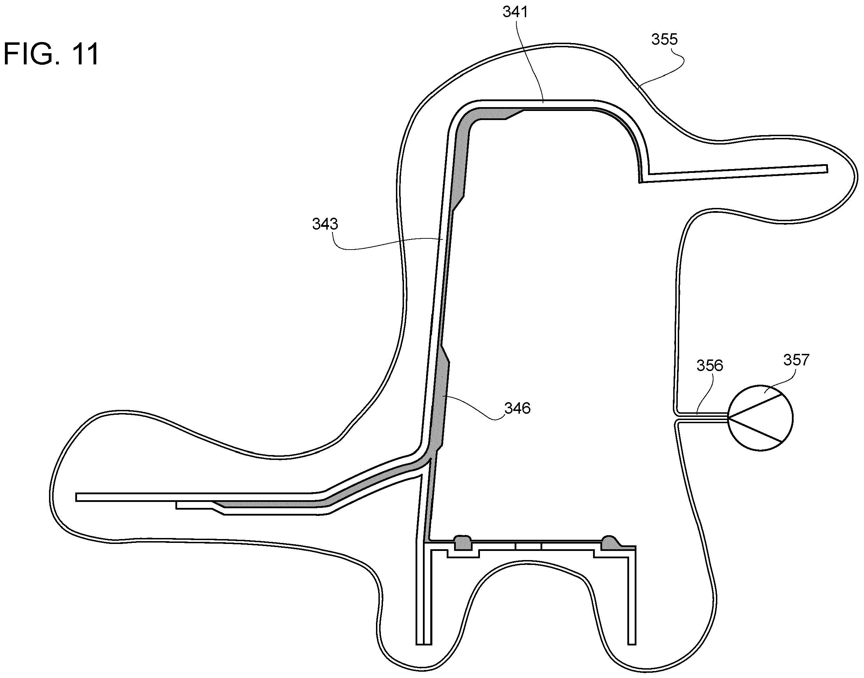

- figure 11 is a cross-sectional view showing a further step of the manufacturing method,

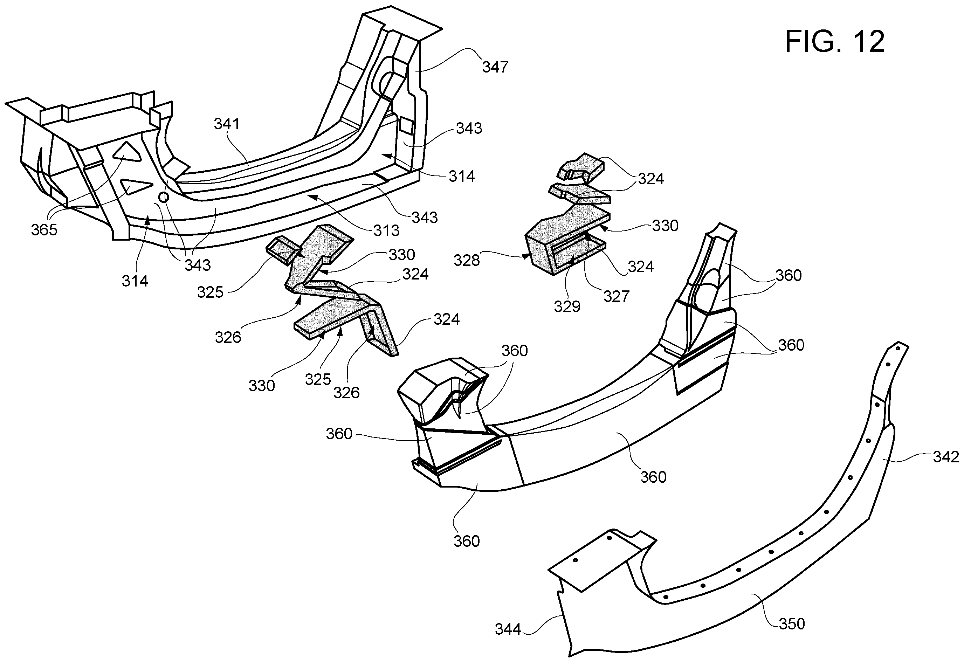

- figure 12 is an exploded view of a closed mould during the manufacturing method, and

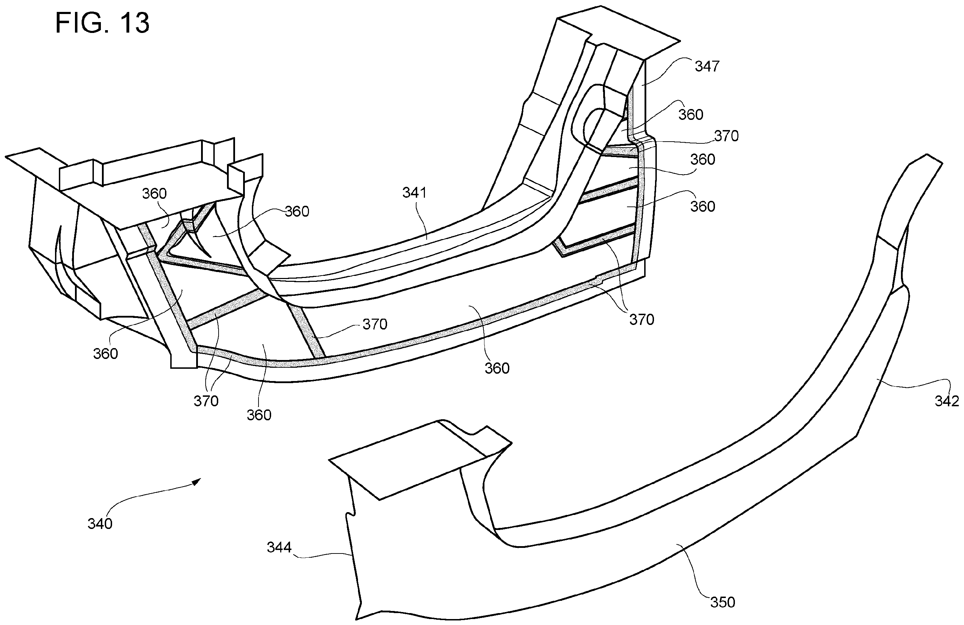

- figure 13 is a perspective view showing the mould of figure 12 in an open configuration,

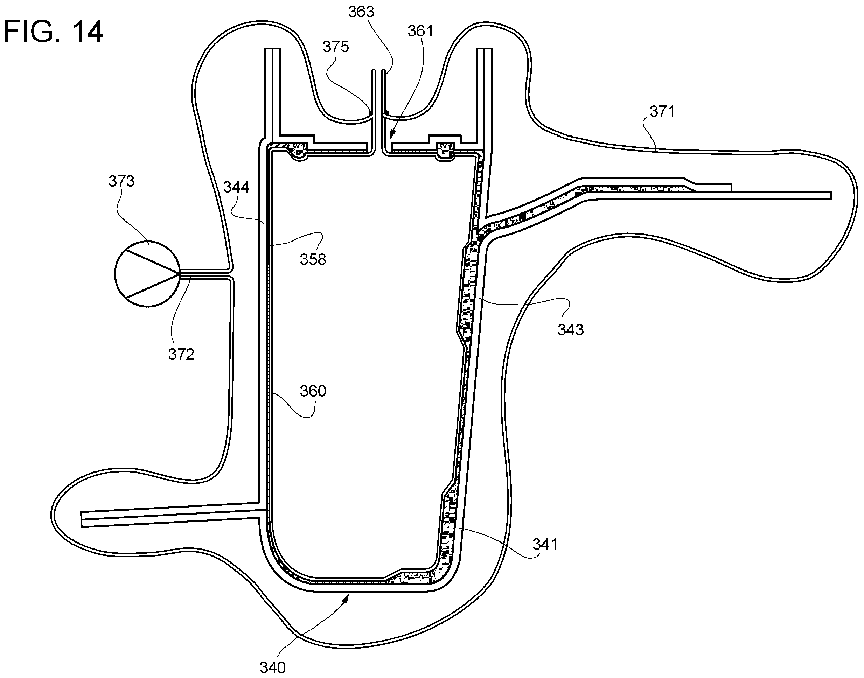

- figure 14 is a cross-sectional view showing a step of the manufacturing method subsequent to the step of figure 11,

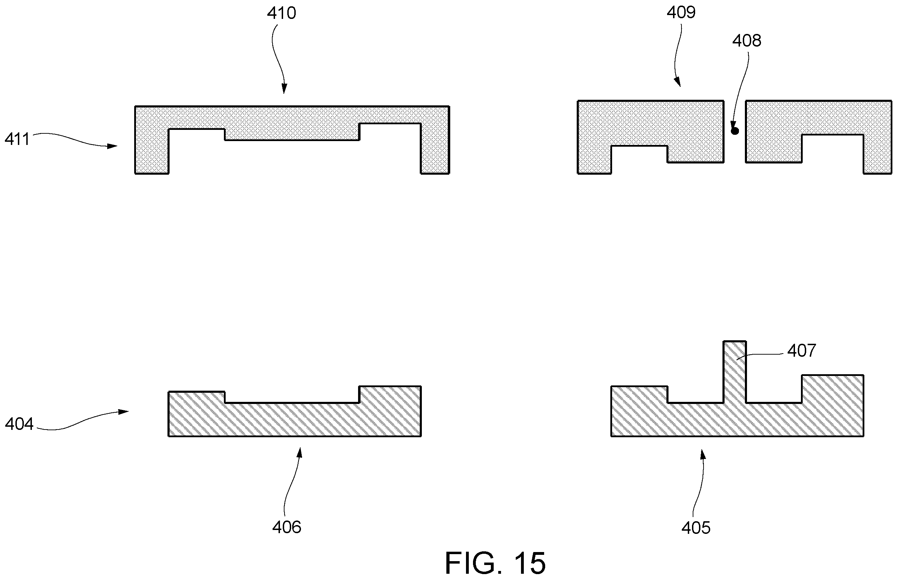

- figure 15 is a schematic view of a model of a casting mould and of a sand casting mould obtained using the model, and

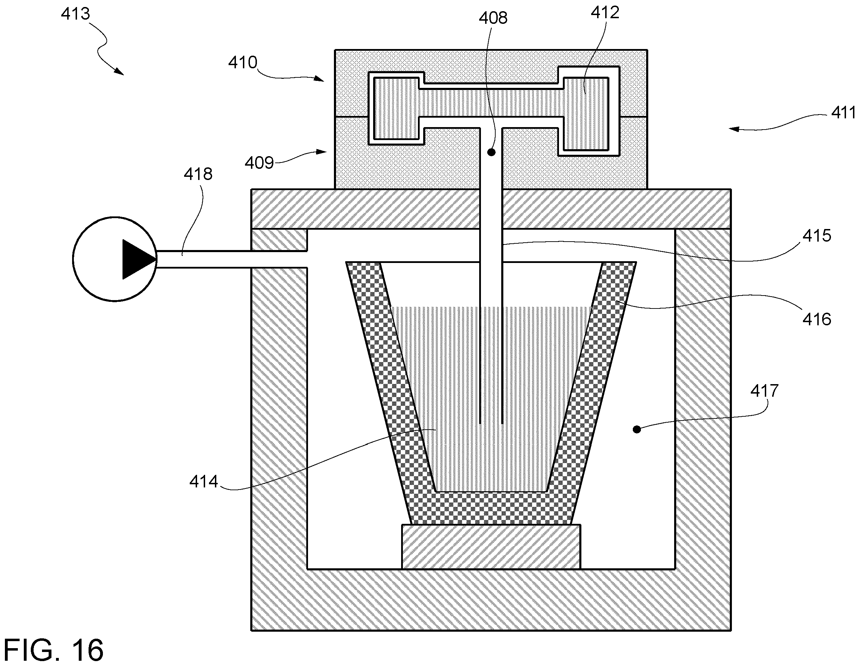

- figure 16 is a schematic view of a casting plant where a component of the frame is manufactured using the casting mould of figure 15.

### EMBODIMENTS OF THE INVENTION

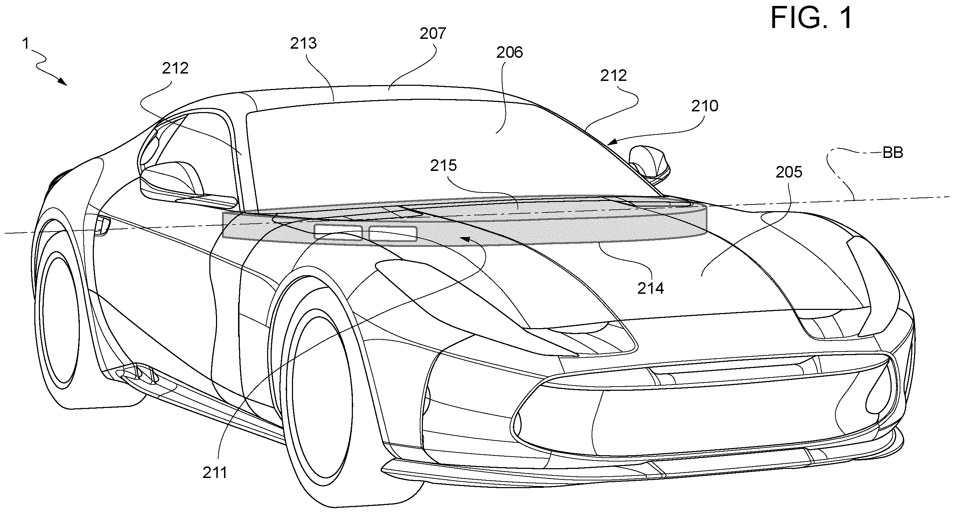

In figure 1, reference number 1 is used to indicate, as a whole, a motor vehicle.

Like all motor vehicles, the motor vehicle 1 has a normal travel direction and comprises a passenger compartment 200 to accommodate at least one driver and, if necessary, one or more passengers.

The motor vehicle 1 comprises a frame 100, which, in turn, comprises a body cell 2, which defines or surrounds the passenger compartment 200. For example, the body cell 2 can be monolithic. Furthermore, the body cell can comprise or be made of carbon fibre.

The body cell 2 comprises, in particular, a lateral end 307 in schematic form. The term "lateral" is to be understood with reference to the orientation according to which the body cell 2 will be arranged in the context of the motor vehicle 1 and with reference to the travel direction thereof. Alternatively, the term "lateral" could also be understood with reference to the orientation of the passenger compartment.

The lateral end 307 is open towards the passenger compartment 200, i.e. it has an opening that allows a person to enter the passenger compartment 200.

In particular, the opening of the lateral end 307 can be occupied by a side door 304 of the motor vehicle 1, in particular in a closed position, i.e. a position in which the side door 304 prevents the person from entering the passenger compartment through the opening.

In other words, the side door 304 in the closed position covers or hides the opening and also the lateral end 307 from a point of view on the outside of the motor vehicle 1.

The side door 304 is coupled to the frame 100 in a movable and, more precisely, rotary manner between the closed position and at least one open position, in which access to the opening is allowed.

The lateral end 307 comprises a beam, in particular a box-shaped beam. The beam extends along a straight direction or axis AA, in particular parallel to the travel direction or, in any case, oriented longitudinally, i.e. oriented so as to flank the side door 304 in the closed position.

The beam has a concave profile according to the axis AA; in the context of the motor vehicle 1, the profile of the beam is concave upwards. In other words, the profile of the beam is concave towards the opening of the lateral end 307.

The beam specifically is a single piece and comprises two uprights 308 defining the respective ends of the beam according to the axis AA. In addition, the beam comprises a longitudinal member or door sill 309 extending along the axis A between the uprights 308.

The door sill 309 is connected to the uprights 308 seamlessly, namely it forms a single body with the uprights 308.

The uprights 308 extend transversely relative to the axis A.

Therefore, the uprights 308 form the concavity of the profile of the beam.

In addition to the lateral end 307, the body cell 2 also comprises a non-shown bottom defining a floorboard or a floor of the passenger compartment.

More in detail, the body cell 2 comprises another lateral end opposite and identical to the lateral end 307, in particular according to a horizontal direction, which is orthogonal to the travel direction.

The floorboard extends between the lateral end 307 and the other lateral end.

The floorboard is preferably connected to the lateral end 307 seamlessly, i.e. the floorboard forms a single body with the lateral end 307 and possibly also with the other lateral end.

In general, the body cell 2 comprises at least one shell 310, which comprises carbon fibre.

The body cell 2 can be understood as a single shell 310 or as a plurality of shells 310 interconnected with one another, regardless of the type of connection between the shells 310. For example, the shells 310 can be connected to one another seamlessly, i.e. so as to form a single, i.e. monolithic, body comprising carbon fibre.

In this specific case, the beam of the lateral end 307 constitutes a shell 310, as well as the floorboard preferably constitutes a shell 310.

The following description, for the sake of brevity, will relate to one single shell 310, i.e. in particular the beam of the lateral end 307.

However, the teachings provided herein for the shell 310 described in detail can directly apply to other shells 310 of the body cell 2 or even to the entire body cell 2 considered as a single shell. In other words, each feature disclosed for the shell 310 described in detail can also apply to all other shells 10 of the body cell 2 or even to the entire body cell 2 considered as a single shell.

The shell 310 has at least two walls 311, 312 facing one another so as to at least partially define or delimit a cavity 313 between the walls 311, 312.

Specifically, the walls 311, 312 are transversal to the axis AA.

The beam of the lateral end 307 or the shell 310 can also have other walls at least partially delimiting or defining the cavity 313, in addition or alternatively to the walls 311, 312.

For example, each or even a single one of the uprights 308 is delimited, according to the axis AA, by two walls 315, 316 transversal to the axis AA. More precisely, the walls 315, 316 extend between the walls 311, 312 transversely to the walls 311, 312.

In particular, the walls 315, 316 face one another.

Furthermore, each or even a single one of the uprights 308 is delimited by respective wall portions 317, 318 of the walls 311, 312.

Hence, the wall portions 317, 318 and the walls 315, 316 form one or each of the uprights 308.

The wall portions 317, 318 or the walls 315, 316 face one another so as to at least partially define or delimit a cavity 314 that is part of the cavity 313. The cavity 314 is completely defined or delimited by the walls 315, 316 and by the wall portions 317, 318. Each of the uprights 308 can define the corresponding cavity 314, for example by means of the walls 315, 316 or the wall portions 317, 318.

Similar concepts also apply, for example, to the door sill 309, which is delimited by respective wall portions 319, 320 of the walls 311, 312.

Furthermore, the door sill 309 is delimited, according to an axis CC, by two walls 321, 322 transversal to the axis CC, the axis CC being transversal to the axis AA. More precisely, the walls 321, 22 extend between the walls 311, 312 transversely to the walls 311, 312.

In addition, the wall 321 extends between the walls 315 of the two uprights 308 transversely to the walls 315, whereas the wall 322 extends between the walls 316 transversely to the walls 316.

In particular, the walls 321, 322 face one another.

The shell 310 further comprises a plurality of partitions 324 comprising carbon fibre.

Each of the partitions 324 can comprise or be defined by a plate, in particular a flat plate.

Each of the partitions 324 extends transversely to the walls 311, 312 between ends respectively connected to the walls 311, 312 in a seamless manner, i.e. forming a single body with the walls 311, 312.

Alternatively or in addition, each of a first group of partitions 324 extends transversely to the walls 315, 316 of one or the other of the uprights 308 between ends respectively connected to the walls 315, 316 in a seamless manner, i.e. forming a single body with the walls 311, 312.

Alternatively or in addition, each of a second group of partitions 324 extends transversely to the walls 321, 322 of the longitudinal member 309 between ends respectively connected to the walls 321, 322 in a seamless manner, i.e. forming a single body with the walls 321, 322. Specifically, the second group of partitions 324 consists of one of the partitions 324.

Preferably, some of the partitions 324 can be grouped together to form geometric shapes, which may be complex.

For example, two of the partitions 324 have respective surfaces 325, 326, in particular transversal to the walls 311, 312, which extend on respective incident planes at an acute angle, so that said two partitions 324 form a V-shaped or crocodile-mouth structure, as best seen from the drawings.

Furthermore, three of the partitions 324 have respective surfaces 327, 328, 329, in particular transversal to the walls 311, 312, the surfaces 327, 329 facing one another and being both transversal to the surface 328, whereby the said three partitions 324 form a C-shaped or omega-shaped or U-shaped structure, as visible from the drawings.

In general, the shape and/or the arrangement of the partitions 324 is optimized, for example by using design-aid computer programs, in particular based on finite element calculation, with the aim of maximizing the resistance of the shell 310 to impacts and/or optimizing a ratio between the sturdiness and the overall weight of the shell 310.

The partitions 324 are arranged so as to divide the cavity 313 into a plurality of separate compartments 332.

Furthermore, at least the majority of the partitions 324 are located in the area of the uprights 308, namely inside the cavities 314 of the uprights 308.

According to a particular embodiment, the body cell 2 further comprises a plurality of bags 360 respectively arranged inside the compartments 332.

Possibly, the bags 360 could be fewer than the compartments 332. Hence, the body cell 2 could also comprise a single bag 360 inside a corresponding compartment 332.

A method for manufacturing the body cell 2 will be described hereinafter.

More precisely, the method for manufacturing the above-described shell 310 with the partitions 324 therein will be described in detail, whereas the methods for manufacturing the other shells 310 will not be described in detail as they are substantially similar to the one described below.

In other words, each of the features of the method disclosed herein is directly applicable, in an independent manner, to the methods for manufacturing each of the shells 310 or even the entire body cell 2 considered as a single shell.

The method comprises providing a mould 340 having inner walls configured or suitable to define the cavity 313. In other words, the inner walls of the mould 340, clearly understood as a closed mould, enclose a cavity identical to the cavity 13. In yet other words, the inner walls of the mould 340 delimit a cavity including the cavity 313.

In view of this, the term cavity 313 will be used herein to identify both the actual cavity 313 of the shell 310 at the end of the method and the cavity 313 inside the closed mould 340.

The mould 40 comprises, in particular, at least two portions 341, 342. More in particular, the mould 340 is closed when the two portions 341, 342 are coupled to one another so as to enclose the cavity 313.

Therefore, the inner walls of the mould 330 include first inner walls 343 of the portion 341 and second inner walls 344 of the portion 342.

The method comprises fixing the partitions 324, already previously cured and therefore in their finished product state, to the mould 340.

Hence, the partitions 324 are arranged inside the mould 340 dividing the cavity 313 into compartments 332.

More precisely, therefore, the partitions 324 are fixed to the portion 341 of the mould 340.

For example, the partitions 324 are fixed, namely held in their positions, by threaded members 331, such as bolts.

The method can further comprise placing a plurality of raw carbon fibre sheets 346 on the inner walls 343 in positions suited to form at least the wall 312.

Then, the inner walls 343 are configured to form at least the wall 312.

Actually, specifically, the raw carbon fibre sheets 346 are arranged on the inner walls 343 so as to also form the walls 315, 316 of each of the uprights 308, as well as to form the walls 321, 322 of the door sill 309.

Hence, the inner walls 343 are further configured to also form the walls 315, 316 and the walls 321, 322.

Further carbon fibre sheets 346 can also be placed on the partitions 324, in particular independently on each of their surfaces.

Furthermore, preferably, the partitions 324 are connected to the raw carbon fibre sheets 346 by means of adhesive films configured to melt or at least soften during heating in an autoclave so as to facilitate the joining between the carbon fibre sheets 346 being heated and the partitions 324.

The carbon fibre sheets 346 comprise, in particular, a carbon fibre fabric impregnated in a resin, more in particular of the thermosetting type.

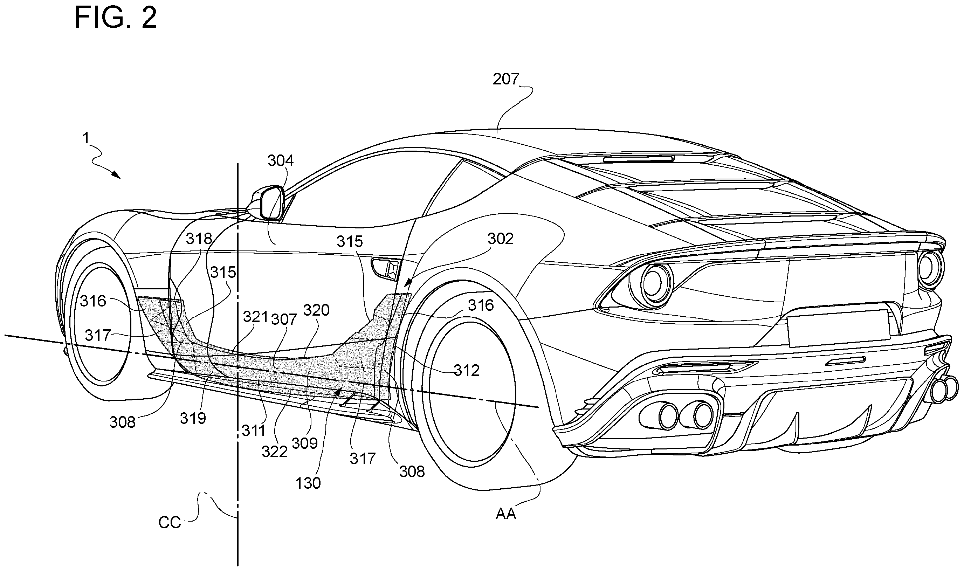

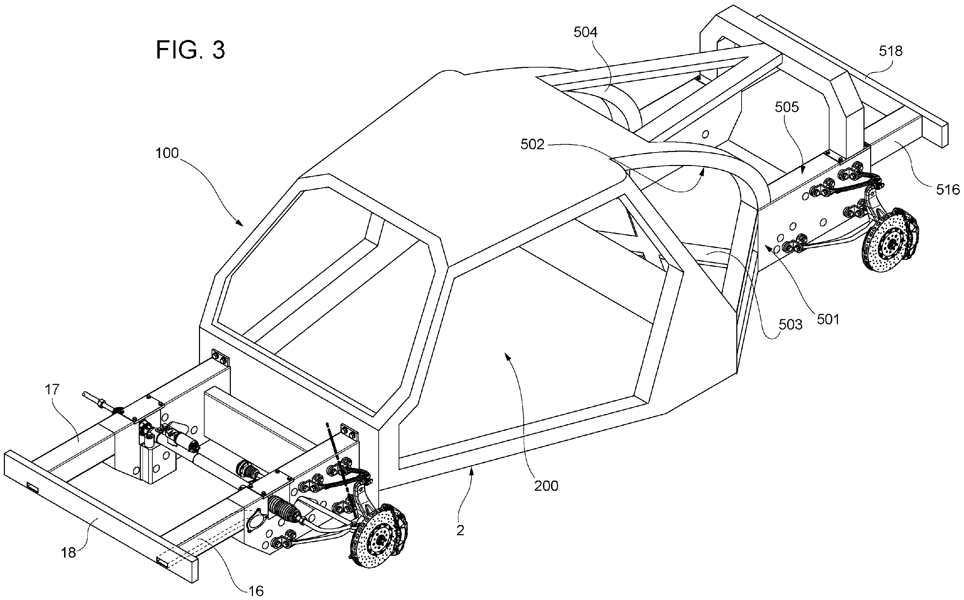

As shown in figures 2 and 3, the portion 41 defines an inner cavity of its, which substantially includes the cavity 13.

Optionally, the method comprises a first autoclave heating of the raw carbon fibre sheets 346 arranged on the inner walls 343. In the first heating, the raw carbon fibre sheets 346 are heated together with the partitions 324 fixed to the portion 341 in the area of the inner walls 343.

Hence, the first heating is performed by placing the portion 341 with the raw carbon fibre sheets 346 and the partitions 324 in the autoclave, without the portion 342.

More in detail, before placing the portion 341 with the raw carbon fibre sheets 46 and the partitions 24 in the autoclave, the portion 341 with the raw carbon fibre sheets 346 and the partitions 324 is enclosed under vacuum inside a vacuum bag 355.

The vacuum bag 355 comprises at least one valve device 356 configured to connect the vacuum bag 355 to a vacuum pump 357.

The vacuum pump 357 is connected to the vacuum bag 355 by means of the valve device 356. Hence, the vacuum pump 357 is used so as to suck the air inside the vacuum bag 355 containing the portion 341 with the raw carbon fibre sheets 346 and the partitions 324. In this way, the portion 341 with the raw carbon fibre sheets 346 and the partitions 324 is put under vacuum.

At this point, the first heating is carried out by placing the vacuum bag 355 containing the portion 341 with the raw carbon fibre sheets 346 and the partitions 324 in the autoclave.

Clearly, the first firing is carried out by operating the autoclave.

After the first heating, the vacuum bag 355 is removed, for example by breaking or simply pulling it away after having reintroduced air into the vacuum bag 355 through the valve device 356.

At this point, the method comprises placing a plurality of raw carbon fibre sheets 358 on the inner walls 344 in positions suited to form at least the wall 311.

The raw carbon fibre sheets 358 preferably are of the same type as the raw carbon fibre sheets 346.

The raw carbon fibre sheets 358 and/or the raw carbon fibre sheets 346 can be held in their positions, for example, by means of adhesive films configured to melt or at least soften during heating in the autoclave.

Then, the mould 340 can be closed with the raw carbon fibre sheets 358, the partitions 324 and, if necessary, also the carbon sheets heated because of the first heating on the inside.

The method further comprises a second autoclave heating of the raw carbon sheets 358 arranged inside the mould 340 and, more precisely, on the inner walls 334, together with the partitions 324 and, in particular, also the carbon fibre sheets heated with the first heating.

More in detail, before the second heating, the method comprises placing the bags 360 inside the respective compartments 332 in the mould 340.

The mould 340, in particular when it is closed, has at least one corresponding opening 361 for each of the compartments 332, so that the openings 361 establish a communication between the respective compartments 332 and the outside of the mould 340.

In other words, the mould 340 is configured to define or defines the openings 361 to establish a communication between the respective compartments 332 and the outside of the mould 340.

Clearly, the openings 361 are through openings, in particular through the inner walls 343 or the inner walls 344.

The bags 360 have respective air inlets 363, through which the bags 360 can be inflated with pressurized air. The air inlets 363 are suited to let pressurized air into the bags 360.

The bags 360 are arranged inside the compartments 332 with the air inlets 363 on the outside of the mould 340 through the openings 361.

Therefore, the air inlets 363 project out of the mould 340, even when it is closed, through the openings 361.

In this way, during the second heating, the mould 340 contains the bags 360, which are inflated by the pressurized air of the autoclave. Indeed, the pressurized air flows into the bags 360 through the air inlets 363 projecting out of the mould 340 through the openings 361.

By inflating, the bags 360 press the raw carbon fibre sheets 358 against the inner walls 344 during the second heating.

Therefore, the dimensions of the bags 360 allow the bags 360 themselves to expand under the pressure of the pressurized air inside the compartments 332, occupying a volume equal to that of the compartments 332.

The mould 340 and, more in particular, the portion 341 can have openings 365 to allow the bags 360 to be extracted from the mould 340 after the second heating.

The openings 365 are through openings going through the inner walls 343.

The bags 360 can be approved to be reusable, in particular for further heating.

Alternatively, the bags 360 can be left inside the compartments 332, which will remain the compartments 332 of the shell 310 or of the body cell 2. In this case, the openings 365 can be particularly small or even absent.

The result of the second heating is, in this specific case, the shell 310.

Conveniently, the mould 340 is enclosed under vacuum, during the second heating, inside a vacuum bag 371.

The vacuum bag 371 comprises at least one valve device 372 configured to connect the vacuum bag 371 to a vacuum pump 373.

The use of the vacuum bag 371, of the valve device 372 and of the vacuum pump 373 is respectively similar to that of the vacuum bag 355, of the valve device 356 and of the vacuum pump 357 and will not be described in further detail.

The vacuum bag 371 is connected, in a fluid-tight manner, to each of the bags 360 on the outside of the mould 340.

The air inlets 363 of the bags 360 project out of the vacuum bag 371, so that they can perform their function.

Therefore, the air inlets 363 continue to allow pressurized air from the autoclave to flow into the bags 360, so that the bags 360 are inflated.

At the same time, since the vacuum bag 371 is fluidtightly connected to the bags 360, pressurized air does not flow into the vacuum bag 371, so that the vacuum can be maintained inside the vacuum bag 371.

At the end of the second heating, the vacuum bag 371 can be removed, for example by breaking or in any case in a manner similar to how the vacuum bag 355 is removed.

Once the vacuum bag 371 has been removed, the shell 310 or, if necessary, the body cell 2 is manufactured.

The first heating is optional and, therefore, it could be omitted. In this case, the second heating becomes a single heating of all the carbon fibre sheets 346, 358, together with the partitions 324 in the closed mould 340.

All the features described above for the second heating can also apply to one single heating.. Therefore, the bags 360 and the vacuum bag 371 can be used as described above.

Furthermore, the motor vehicle 1 includes a plurality of outer panels, namely visible from the outside of the motor vehicle 1, such as a hood 205, a windshield 206 and, if necessary, a roof 207. The outer panels are supported in a fixed position by the frame 100, namely they are fixed relative to it.

In this specific case, the hood 205 is a front hood, according to the travel direction of the motor vehicle 1.

The frame 100 further comprises a windshield frame 210, which surrounds the windshield 206. The latter is fixed to the windshield frame 210 in an area with a closed contour defined by the windshield frame 210. Hence, the windshield 206 is surrounded by the closed contour.

The windshield frame 210 comprises a crossbar 211 constituting a support base for supporting the windshield 206. In other words, the crossbar 211 is arranged under the windshield 206.

Furthermore, the crossbar 211 protrudes relative to the windshield 206 along the travel direction of the motor vehicle 1, in particular at the front relative to the windshield 206.

The crossbar 211 is at least partly or completely covered by the hood 205.

The crossbar 211 comprises or, more precisely, is a beam, in particular of the box-shaped type, more in particular with a greater width extension, namely along a direction BB orthogonal to the travel direction and transversal to the sides of the motor vehicle 1.

Specifically, since the windshield 206 extends according to a curved and concave surface towards the passenger compartment 200, the crossbar 211 has a curved shape, in particular with a radius of curvature belonging to a plane defined by the direction BB and by the travel direction. However, this is not essential, as both the windshield 206 and the crossbar 211 can have different shapes, without lacking generality.

In addition, the windshield frame 210 comprises a pair of uprights 212 respectively fixed to opposite lateral ends of the crossbar 211, namely opposite ends relative to the direction BB.

The uprights 212 extend transversely relative to the crossbar 211, in particular upwards, so as to form the aforementioned area with a closed contour for positioning the windshield 206.

Optionally, the closed contour is completed by a further crossbar 213 of the windshield frame 210 extending parallel to the axis BB. The crossbar 213 has two lateral ends, namely according to the axis BB, fixed to the uprights 212.

In particular, the crossbar 213 also supports the roof 207. The crossbar 213 is arranged above the uprights 212 and clearly also above the crossbar 211. In case the motor vehicle 1 is convertible or without the roof 207, the crossbar 213 could consequently be absent, without in any case the area for positioning the windscreen 206 being modified. As a matter of fact, the closed contour can also be defined by the area for positioning the windshield 206 and not necessarily by the frame 210.

The crossbar 211 comprises a plurality of walls, which include at least one wall 214 facing downwards or on the opposite side with respect to the windshield 206 and, consequently, to the area for positioning the windshield 206.

Specifically, the wall 214 is opposite, i.e. facing away from another wall 215 of the crossbar 211; the wall 215 can support the windshield 206, namely form a base for the windshield 206.

The crossbar 211 also comprises a wall 216, which is transversal to both walls 214, 215 and faces the passenger compartment 200.

Furthermore, the crossbar 211 comprises a wall 217, which is transversal to the wall 214 and, specifically, also to the wall 215.

The wall 217 extends so as to be transversely incident to the wall 214.

In particular, the wall 217 is curved, more in particular according to the already mentioned radius of curvature. In the embodiment shown herein, the wall 217 is a portion of a side wall of a cylinder. The axis of the cylinder is oriented upwards or is orthogonal to a floorboard of the frame 100.

The wall 217 is at the front with respect to the windshield 206 or to the wall 216.

The frame 100 advantageously comprises a duct 220 extending through the crossbar 211.

The duct 220 extends between an opening 221 made in the wall 217 and an opening 222 made in the wall 214.

More precisely, the duct 220 is defined by a chamber completely inside the crossbar 211.

The chamber is open through the openings 221, 222. In particular, the wall 217 has another opening 221, for example side by side and specifically identical to the previous one.

The openings 221 communicate with the environment outside the motor vehicle 1 so as to be able to introduce air into the duct 220. In fact, the openings 221 communicate, in particular in a direct manner, with a compartment of the motor vehicle 1 covered by the hood 205.

Optionally, the crossbar 211 can have ribs inside the chamber or duct 220 with the function of reinforcing or increasing the resistance to stresses of the crossbar 211, which is inevitably slightly weakened, from a structural point of view, by the presence of the duct 220. Actually, the ribs are sufficient to totally compensate for the slight weakening caused by the presence of the duct 220.

For example, each of the ribs can extend from any one of the walls 214, 215 towards the other one of the walls 214, 215 or be directly connected to both walls 214, 215, thus defining a partition. The partition could also delimit the chamber or duct 220, namely define a wall of the chamber or duct 220.

Preferably, the wall 214 comprises a portion 223 concave downwards, namely towards the opposite side with respect to the area for positioning the windscreen 6.

In particular, the opening 222 is obtained in the portion 223.

As explained more clearly below, the portion 223 defines a recess of the wall 214; in turn, the recess has the function of a seat for introducing objects or devices therein.

The remaining portion of the wall 214, distinct from the portion 223, is identified by reference number 224.

The portion 223 comprises a flat area 225 inclined with respect to the portion 224, where which the opening 222 is obtained.

Therefore, the opening 222 extends according to an ideal surface corresponding to an ideal continuation of the flat area 225; a straight line orthogonal to the flat area 225 or to the ideal surface is oriented towards a side of the motor vehicle 1. Said straight line is coplanar to the axis BB and, therefore, defines with the latter a plane, which, in turn, is orthogonal to the travel direction. Hence, the straight line orthogonal to the flat area 225 or to the ideal surface belongs to a plane orthogonal to the travel direction.

The flat area 225 is a particular example, but it could be replaced by a corresponding non-flat area. In this case, a tangent plane would still exist. Said tangent plane would have the same properties as the flat area 225.

The opening 222 communicates, in particular in a direct manner, with a housing 226 defined by the frame 100; the housing 226 comprises the aforementioned recess with a seat function.

The housing 226 distinct from the passenger compartment 200. In particular, the frame 100 comprises a firewall 227, which divides the housing 226 from the passenger compartment 200.

The housing 226 is arranged in front of the passenger compartment 200, according to the travel direction of the motor vehicle 1.

Hence, the housing 226 communicates with the duct 220 through the opening 222.

The motor vehicle 1 comprises an air conditioning device 230 configured to condition the passenger compartment 200, i.e. to cool or heat the passenger compartment 200.

The device 320 is known in the industry and, therefore, it will not be described in further detail.

The device 230 is arranged within the housing 226, namely is contained therein.

The device 230 conditions the air contained in the housing 226 and introduces it into the passenger compartment 200.

Therefore, the firewall 227 is provided with sufficient ducts, which are not shown herein, to allow the device 230 to introduce air into the passenger compartment 200.

The motor vehicle 1 further comprises at least one, some or all of the typical components, such as a suspension 3, a steering knuckle 4, a wheel hub 5, an axle shaft 6 and a steering box 7.

The wheel hub 5 has a fixed portion, which is fixed with respect to the steering knuckle 4, and a rotary portion, which can rotate around an axis A transversal to the travel direction.

The fixed portion is carried by the steering knuckle 4, whereas the rotary portion is coupled to the axle shaft 6 so that it can be caused to rotate by the latter.

The axle shaft 6 extends along a straight axis B parallel to the axis A, but not necessarily coinciding with it.

The steering box 7 extends along a further straight axis C parallel to the axes A, B or transversal and, more precisely, orthogonal to the travel direction.

The steering box 7 is a well-known device coupled to the wheel hub 5 with the function of steering the fixed portion of the wheel hub 5, in particular transforming a rotary movement of a steering wheel (not shown) of the motor vehicle 1 into a straight movement along the axis C useful for steering the fixed portion of the wheel hub 5.

As a matter of fact, the steering box 7 is more generally part of a steering apparatus of the motor vehicle 1, including, for example, also the steering wheel and configured to steer the fixed portion of the wheel hub 5.

Furthermore, as explained in the following, the steering box 7 can be considered as part of the frame 100.

The steering box 7 comprises a steering tie rod 40 coupled to the steering knuckle 4 or to the wheel hub 5 in a known manner.

Furthermore, the steering box 7 comprises a steering transmission configured to transmit the rotation of the steering wheel to the steering tie rod 40, so that the steering tie rod 40 translates in response to the rotation of the steering wheel.

The steering transmission comprises a known and not shown transmission element, such as for example a rack or a worm screw, possibly with recirculating balls.

The transmission element is coupled to the steering tie rod 40; for example, the transmission element is fixed with respect to the steering tie rod 40, in particular fastened to the steering tie rod 40.

The steering box 7 comprises a tubular casing 41, which at least partially houses the transmission element and extends along the axis C.

The transmission element is coupled to the tubular casing 41 in an axially movable or translating manner along the axis C inside the casing 41.

Therefore, the steering tie rod 40 is configured so as to move in response to the translation of the transmission element, thus steering the wheel hub 5, in particular causing a rotation of the steering knuckle 4 around an axis oriented from the bottom to the top.

The transmission element can be coupled to the steering wheel by means of a kinematic chain of the steering transmission, for example including a shaft 43 coupled to the steering wheel so as to rotate in response to a rotation of the steering wheel and ending inside the casing 41 with a transmission member (not shown) configured to cooperate with the transmission element so as to transmit a rotation of the shaft 43 to the transmission element, which translates in response to the latter rotation.

For example, the transmission member could comprise a pinion meshing with the rack that is part of the transmission element.

Therefore, the steering transmission can be a typical pinion-rack mechanism, in which a pinion coupled to the steering wheel meshes with a rack fixed to the steering tie rod; the rack translates along the axis C in response to the rotation of the pinion, which, in turn, is caused by the steering wheel through the kinematic chain.

Optionally, the steering box 7 can comprise an actuator device 44 for performing a power steering function.

The actuator device 44 is carried by the casing 41 and has, for example, a casing 44a of its, which is fixed relative to the casing 41.

The actuator device 44 is configured to move the transmission element along the axis C, for example independently or in coordination with the rotation of the steering wheel.

The actuator device 44 can comprise an electric motor inside the casing 44a and a further transmission, which is not shown, for transmitting the output power of the electric motor to the transmission element.

Furthermore, the motor vehicle 1 comprises a braking device 113 configured to brake the wheel hub 5 or, more precisely, the rotary portion thereof.

The braking device 113 comprises a first braking element 114, for example a disc, which is fixed with respect to the rotary portion of the wheel hub 5, and a second braking element 115, for example a brake caliper, which carried by the fixed portion of the wheel hub 5 or by the steering knuckle 4.

The second braking element 115 can be operated, for example through a known and not shown actuator, so as to be brought into contact with the first braking element 114, thus generating a braking torque acting upon the rotary portion of the wheel hub 5 due to the friction developed by the contact between the braking elements 114, 115.

In addition, the frame 100 comprises a front frame assembly 11, in particular fixed with respect to the body cell 2 and having, for example, the function of supporting body elements of the motor vehicle 1, namely external panels or sheet metal, such as for example a bumper 8, a fender 9 and the like.

The assembly 11 comprises a front suspension attachment structure 12, alternatively called "shock tower".

More precisely, the assembly 11 comprises two suspension attachment structures or bodies 12 arranged at the lateral ends of the body cell 2, according to a horizontal direction orthogonal to the travel direction.

The structures 12 are parallel to one another along respective axes D parallel to the travel direction.

The structures 12 project relative to the body cell 2. More precisely, the structures 12 project along the axes D from the body cell 2, in particular directly from the body cell 2.

The structures 12 preferably are identical to one another. For this reason, the description below will only disclose in detail one of the structures 12, provided that each feature described for one of the structures 12 can also apply to the other structure 12. Therefore, the expression "the structure 12" can indifferently refer to any of the structures 12.

The structures 12, if necessary, could also be considered as one single structure 12.

The structure 12 has an attachment portion 13, which is fixed with respect to the body cell 2, namely is fastened to the latter, for example by means of releasable fixing means 14, in particular comprising threaded members such as bolts 128.

The structure 12 has the function of supporting the suspension 3. Indeed, the assembly 11 also comprises a plurality of attachment elements or attachments 15 configured to allow the suspension 3 to be coupled to the attachment portion 13.

Some of the attachments 15 are located in the area of the attachment portion 13, although this does not exclude that other attachments 15 may be located in the area of other portions of the structure 12.

Furthermore, the attachments 15 can be part of the structure 12.

The structure 12 or rather each one of the structures 12 can preferably be manufactured as one single piece, for instance manufactured by means of a casting technique or, more precisely, a die casting technique.

The suspension 3 carries the steering knuckle 4 and is coupled to the attachment portion 13 through the attachments 15, in particular in a movable manner with respect to the structure 12. In turn, the steering knuckle 4 is movable relative to the suspension 3.

Furthermore, the frame 100 and, more in particular, the assembly 11 comprises the steering box 7 with the steering tie rod 40, the tubular casing 41 and the transmission element.

The tubular casing 41 is rigidly fixed to the structure 12.

The term "rigidly fixed" indicates that the tubular casing 41 is fixed with respect to the structure 12; in other words, the casing 41 cannot make relative movements with respect to the structure 12 that go beyond negligible deformations or local vibrations of materials commonly recognized as rigid, such as metals. In other words, the tubular casing 41 is not suspended with respect to the structure 12 by means of elastic devices, such as springs or flexible bodies, possibly made of rubber.

Conveniently, the structure 12 comprises a plurality of threaded holes, so that the assembly 11 comprises a plurality of threaded members 49, for example self-threading screws, coupled to the threaded holes and also to the tubular casing 41 so as to rigidly fix the tubular casing 41 to the structure 12.

More precisely, the threaded members 49 go through respective sleeves 45 fixed with respect to the casing 41 and arranged in the area of the threaded holes in a coaxial manner.

The sleeves 45 are part of the steering box 7 and each axially extend between two end faces, one of them being arranged around a corresponding one of the threaded holes, whereas the other one faces the opposite way.

In particular, the threaded members 49 have respective heads 46, which are tightened in the screwing of the threaded members 49 into the threaded holes; the heads 46 are respectively tightened on the faces of the sleeves 45 facing the opposite way with respective to those arranged around the threaded holes.

The assembly 11 further comprises at least one absorption element 16 for absorbing a front crash of the motor vehicle 1. The absorption element 16 comprises or rather is a longitudinal member, namely a beam, in particular a box-shaped beam, extending parallel to the travel direction of the motor vehicle 1.

The element 16 is distinct from the structure 12 and is fixed relative to the latter, namely is fastened to it.

The element 16 extends along the straight axis D parallel to the travel direction of the motor vehicle 1.

The element 16 extends starting from the structure 12, namely it projects relative to the structure 12, in particular towards the bumper 8. Specifically, the element 16 directly extends starting from the structure 12, namely it directly project from the latter.

More in particular, the element 16 extends towards the bumper 8 until it ends with an end 16a opposite the structure 12.

The structure 12 is arranged between the element 16 and the body cell 2 according to the axis D.

Actually, the assembly 11 also comprises another absorption element 17, preferably identical to the previous one and protruding parallel to the axis D from the other structure 12 that is not described in detail.

For the sake of brevity, as far as the absorption elements 16, 17 are concerned, the following description will only discuss the absorption element 16, provided that all the teachings disclosed herein can also apply to the absorption element 17.

Basically, the two portions of the assembly 11 defined by the absorption element 16 with the relative structure 12 and by the absorption element 17 with the relative structure 12, respectively, can be identical to one another, namely have the same characteristics. More precisely, each of the characteristics of one portion can apply to the other portion.

Furthermore, the assembly 11 comprises a third absorption element 18 for absorbing a front crash of the motor vehicle 1. The absorption element 18 comprises or rather is a crossbar, namely a beam, in particular a box-shaped beam, extending transversely and, more precisely, orthogonally to the travel direction of the motor vehicle 1, in particular a horizontal beam.

The element 18 has two ends 18a, 18b fixed to the elements 16, 17, respectively.

The end 18a is fixed at the end 16a.

The elements 16, 17, 18 are individually part of a crash box of the assembly 11.

The assembly 11 comprises a channel 120 continuously extending through the absorption element 16 and the structure 12 between an inlet opening 121 obtained at the end 16a along the axis D and an outlet opening 122 obtained in the structure 12 along an axis HH towards the area for placing the suspension 3 or towards the braking device 113.

Specifically, the axis HH is transversal or, more precisely, orthogonal to the D axis.

The absorption element 18 or, more precisely, the end 18a has a through vent 123, in particular along the axis D, designed to convey air to the channel 120 through the inlet opening 121.

More in particular, the vent 123 is aligned with the opening 121 along the axis D.

Basically, the vent 123 is adjacent to or matches the opening 121.

Similarly, the bumper 8 has a through vent (not shown), in particular along the axis D, designed to convey air to the vent 123.

More in particular, the vent of the bumper 8 is aligned with the vent 123 along the axis D.

Basically, the vent of the bumper 8 is adjacent to or matches the vent 23.

The channel 120 extends along a direction 127, which comprises, in particular, at least two segments 125, 126, the segment 125 being parallel to or, more precisely, coinciding with the axis D; the segment 126 is, for example, a connection between the axis D and the axis H, namely it joins the axes D, H.

More in particular, the channel 120 is defined by the segments 125, 126.

The segment 125 is a straight portion of the channel 120; this straight portion extends along the axis D and, in particular, extends along a length equal to that of the absorption element 16 along the axis D.

In other words, the straight portion extends from the opening 121 to the structure 12.

Consequently, the absorption element 16 is tubular and is crossed, from side to side, along the axis D, by the segment 125.

The segment 126 is a curved end portion, which completely extends inside the structure 12 and ends with the opening 122.

Preferably, the curved end portion comprises a divergent segment, for example an end segment ending with the opening 122 or an intermediate segment between the end segment and the segment 125.

This is not strictly limiting. In fact, in general, the channel 120 could comprise one or more divergent segments, possibly straight or curved. Each of the divergent segments could extend through the absorption element 16 or through the structure 12.

In this specific case, the segment 126 is entirely divergent, although even a sole terminal portion thereof could have been divergent up to the opening 122.

Hence, the divergent segment ends, in particular, with the opening 122.

The curved end portion is preferably defined by walls 131, 132 joined by a union 129 having an increasing radius along the curved end portion towards the opening 122.

Conveniently, the assembly 11 further comprises a fixing interface 130 fixed relative to the structure 12 and arranged around the opening 122.

In particular, the fixing interface 130 comprises a bracket fixed to the structure 12. More in particular, the bracket defines a frame that completely surrounds or circumscribes the opening 122.

The fixing interface 130 is configured to allow a known diffuser device, which is not shown herein, to be fixed to the structure 12. The function of the diffuser device is that of directing the air flowing out of the opening 122 towards the braking device 113.

In the prior art, the diffuser device is normally used to direct air flowing out of an outlet opening of a dedicated duct not made through the absorption element 16 and the structure 12, but rather completely separate from each one of the structure 12 and the absorption element 16. This duct, clearly different from the channel 120, is absent in the assembly 11 and, more in general, in the frame 100 or in the motor vehicle 1.

In particular, the diffuser device can be fixed to the structure 12 through the fixing interface 130 in a position in which it communicates with the opening 122, so as to be able to perform its function.

For example, the diffuser device can be coupled to the interface 130 by means of known fixing devices, such as threaded members.

In the same way, the fixing interface 130 can be fixed to the structure 12 by means of known fixing devices, such as threaded members.

Preferably, the structure 12 is internally hollow and is manufactured through casting. More in particular, the structure 12 has thicker walls, as they are more stressed in use, and other thinner walls, which can have a minimum nominal thickness of circa 2 mm.

In order to manufacture the structure 12, a low pressure sand casting is used and, therefore, at first, a model 404 (generally made of resin) of the structure 12 is manufactured, which reproduces the external appearance of the structure 12 and is divided into two halves 405 and 406 (a lower half 405 and an upper half 406).

The half 405 of the model has (at least) a protuberance 407, which will form a casting channel 408, through which the molten metal will be fed in the manner described below.

Using the two halves 405 and 406 of the model 404, the two halves 409 and 410 of the mould 411 are obtained through lost sand casting (which reproduces in negative the shape of the model 404 and, therefore, the shape of the structure 12) .

The lower half 409 of the sand casting mould 411 has the casting channel 408, through which the molten metal will be fed in the manner described below.

In particular, the two halves 409 and 410 are joined together to form the sand casting mould 411 with the interposition of one or more inner cores 412.

In other words, lost cores 412 are arranged inside the two halves 409 and 410 (and will be destroyed and eliminated after the solidification of the component); preferably, the lost cores 412 are also made of sand with the addition of inorganic binders.

The sand casting mould 411 is then placed in a feeding system 413 for feeding the molten metal 414 (liquid aluminium alloy) under pressure, where the molten metal 414 is cast into the sand casting mould 411, which, at the end of the process, when the molten metal 414 has solidified, will be destroyed to extract the component.

The feeding system 413 feeds the molten metal 414 into the sand casting mould 411 at a pressure of circa 1.2 bar to allow the molten metal 414 to penetrate the sand casting mould 411 by completely filling the whole sand casting mould 411.

In particular, the feeding system 413 causes the molten metal to flow upwards through a casting tube 415 immersed in a bath of molten metal 414 (contained in a crucible 416), on whose surface a preferably low pressure (of circa 1.2 bar) is applied.

The feeding system 413 comprises a watertight chamber 417, inside which an overpressure is obtained by means of a pressurizing device 418. The watertight chamber 417 houses the crucible 416 containing the bath of molten metal 414 and in the bath of molten metal 414 there is inserted the casting tube 415, which ends in the casting channel 408 of the sand casting mould 411; in use, the overpressure present in the watertight chamber 417 causes the molten metal 414 to flow upwards along the casting tube 415, which enters the sand casting mould 411.

For example, the molten metal is an aluminium alloy.

The above-described ways in which the structure 12 ("shock tower") can be manufactured through low pressure sand casting can be applied to any other hollow component of the frame 100, especially when the component has very thin walls (namely, having a minimum nominal thickness close to 2 mm or between 2 mm and 3 mm).

The structure 12 further comprises a collapsible portion 20 located between the element 16 and the attachment portion 13 according to the axis D.

More precisely, the collapsible portion 20 extends along a direction orthogonal to the axis D and to the axis C, namely a direction from the top to the bottom, for the entire extension of the structure 12 along the same direction. In other words, the collapsible portion 20 has an extension along the latter direction equal to an extension of the structure 12 along the same direction.

Furthermore, in particular, the collapsible portion 20 is adjacent to the element 16 with respect to the axis D. In other words, the element 16 projects from the collapsible portion 20, more in particular directly from the collapsible portion 20.

Some of the attachments 15 are optionally arranged in the area of the collapsible portion 20.

Preferably, the structure 12 consists of the portions 13, 20, and possibly the attachments 15 in addition.

The collapsible portion 20 is less stiff to compression than the attachment portion 13. In other words, the collapsible portion 20 has a compression stiffness that is smaller than that of the attachment portion 13.

Furthermore, the collapsible portion 20 has a compression stiffness that is equal to or greater than that of the element 16, although this is not strictly necessary. In fact, according to alternative embodiments, the collapsible portion 20 could be less stiff to compression than the element 16.

In particular, the collapsible portion 20 has a compressive strength defined by a breaking compression stress equal to any value within a range between 140 kN and 200 kN, more preferably between 160 kN and 180 kN.

Furthermore, in greater detail, the extension of the collapsible portion 20 according to the axis D is smaller than half the overall extension of the structure 12 along the axis D, namely the distance between the element 16 and the body cell 2.

More precisely, the extension of the collapsible portion 20 according to the axis D is smaller than three fifths of the overall extension of the structure 12 along the axis D.

In particular, the collapsible portion 20 is such that a maximum deceleration of the motor vehicle 1 along the axis D is equal to any value within a range between 15G and 25G.

Preferably, the casing 41 is fixed in the area of the collapsible portion 20 and extends transversely relative to the axis D, namely along the axis C. In this case, the term "in the area of" means that the point of actual fixing of the casing 41 to the structure 12 belongs to the collapsible portion 20.

More specifically, the threaded holes are formed in the collapsible portion 20.

In particular, according to the axis C, the threaded holes are obtained on the inside of the absorption elements 16, 17 or between the absorption elements 16, 17.

Advantageously, the casing 41 is the only beam element or beam fixed in the area of the collapsible portion 20 and extending transversely to the axis D.

In other words, the assembly 11 lacks beam elements or beams distinct from the casing 41, fixed in the area of the collapsible portion 20 and extending transversely to the axis D.

Therefore, there are no beams or crossbars connecting the collapsible portions 20 of the structures 12 extending parallel to the axis C or transversely to the axis D.

Similarly, there are no beams or crossbars connecting the collapsible portion 20 of one of the structures 12 to the attachment portion 13 of the other one of the structures 12.

In the embodiment shown herein, the assembly 11 comprises a beam or crossbar 48 fixed to the structure 12 in the area of the attachment portion 13.

The crossbar 48 extends transversely to the axis D or parallel to the axis C. Furthermore, preferably, the crossbar 48 is arranged between the structures 12 and, more precisely, connects them by being fixed to both structures 12 in the area of their attachment portions 13.

Preferably, the collapsible portion 20 has a through hole along the axis C. The steering box 7 goes through the collapsible portion 20 through the through hole. Namely, the steering box 7 goes through the through hole along the axis C. In particular, the steering tie rod 40 goes through the through hole along the axis C.

More precisely, the collapsible portion 20 has an end 21, in particular an upper end, according to a vertical axis H, i.e. orthogonal to both axes D and C. The end 21 has a recess 22, which extends deeply along the axis H.

The recess 22 accommodates the steering box 7 or, more precisely, the steering tie rod. In other words, the steering box 7 or, more precisely, the steering tie rod crosses the structure 12 through the recess 22, namely it crosses or extends through the recess 22 along the axis C.

The casing 41 extends, in particular, on the side opposite the suspension attachments 15 with respect to the structure 12.

In other words, the casing 41 extends between the structures 12.

The steering tie rod 40 projects with respect to the casing 41 or comes out of the casing 41 according to the axis C.

The recess 22 is open along the axis H, in particular upwards. In other words, the recess 22 has a mouth opening, namely an upper end, extending transversely to the axis H.

The recess 22 has a U-shaped or concave shape relative to the axis H, in particular upwards.

According to the axis C, the recess 22 extends over the entire extension or width of the collapsible portion 20 along the axis C, i.e. in the area of the recess 22 itself.

Preferably, the recess 22 has a depth along the axis H greater than at least one third of the overall extension of the collapsible portion 20 along the axis H.

Furthermore, conveniently, the recess 22 has an extension parallel to the axis D greater than at least one third or, more preferably, at least half of the overall extension of the collapsible portion 20 along the axis D.

Alternatively, a ratio between the maximum extension of the recess 22 parallel to the axis D and the overall extension of the structure 12 along the axis D is equal to any value between 1/15 and 1/3.

Therefore, due to and in the area of the recess 22, the collapsible portion 20 has a cross section with respect to the axis D that is weakened compared to any cross section of the attachment portion 13 with respect to the same axis D.

Hence, in this sense, the collapsible portion 20 is generally weakened with respect to the attachment portion 13. This is the reason for the smaller compression stiffness of the collapsible portion 20 compared to the attachment portion 13.

Conveniently, the collapsible portion 20 can be further weakened, for example since the collapsible portion 20 comprises one or more holes 23 extending transversely to both axes D, H, for example parallel to the axis C. In other words, the holes 23 extend along respective directions transverse to both axes D, H or parallel to the axis C.

Optionally, the holes 23 are substantially aligned with the recess 22 according to the axis H. Herein, the term "substantially" indicates that at least one axis parallel to the axis H extends inside the recess 22 and simultaneously intersects or is tangent to one of the holes 23.

Each of the holes 33 can possibly be a through hole of the collapsible portion 20.

Preferably, the recess 22 is aligned with the first axis D. I.e. the axis D extends inside the recess 22. For the sake of clarity, it is recalled here that the axis D is the axis of the beam or longitudinal member defining the element 16.

Advantageously, the assembly 11 further comprises an absorber body 24 and releasable fixing devices 25, which fix the absorber body 24 on the collapsible portion 20 in a releasable manner.

More in detail, the releasable fixing devices 25 comprise threaded elements or a fixing interface coupled to the collapsible portion 20 in a fixed manner with respect thereto. Specifically, the threaded elements comprise threaded holes made in the collapsible portion 20 and respective screws that can be screwed into the threaded holes. In particular, the threaded holes extend parallel to the axis H.

The absorber body 24 comprises or rather is a plate preferably having a thickness of less than 20 mm, more preferably less than 10 mm.

The absorber body 24 is fixed to the collapsible portion 20 in the area of the recess 22.

More precisely, the absorber body 24 covers or defines a cover for the mouth opening of the recess 22 in the direction of the axis H.

The absorber body 24 is basically arranged above the recess 22.

The absorber body 24 extends parallel to the axis D with an extension greater than that of the recess 22 according to the same axis D.

In particular, the absorber body 24 completely covers the recess 22 or its mouth opening, in particular from above.

The thickness of the plate of the absorber body 24 or defining the absorber body 24 is oriented along the axis H.

Actually, the assembly 11 could preferably comprise a plurality of absorber bodies, if necessary comprising or defined by respective plates, all distinguished from one another, for example because of their thickness or shape.

The plurality of bodies includes or comprises the absorber body 24, whereas the other bodies of the plurality are not shown.

The fixing devices 25 are configured to fix each one of the absorber bodies of the plurality to the collapsible portion 20 in a releasable manner in the same position in which the absorber body 24 is fixed, after the absorber body 24 has been released and removed from its position, namely disassembled from the structure 12.

However, this is not limiting, since other fixing devices distinct from the fixing devices 25 could be used to fix each of the other absorber bodies that are not shown herein.

Hence, the absorber body 24 can be replaced by any of the other absorber bodies, which may not actually be mounted on the motor vehicle 1 or fixed to the structure 12.

The plurality of absorber bodies rather create a set of interchangeable components or bodies with a different stiffness and deformability.

Optionally, the absorber bodies can be supplied in a kit and/or identified by means of distinct identification signs, for example abbreviations or colours.

The frame 100 further comprises a rear frame assembly 501, in particular fixed with respect to the body cell 2 and having, for example, a function similar to that of the assembly 11.

The assembly 501 comprises a structure 502 defining an engine compartment designed to house an engine for the propulsion of the motor vehicle 1.

The structure 502 comprises a lower portion 503 for supporting the engine and an upper portion 504 arranged so as to cover or protect the engine compartment or engine from above.

The upper portion 504 can be considered part of the body cell 2 and, in particular, forms one single body with the body cell 2. Therefore, the upper portion 504 can comprise or be made of carbon fibre.

On the other hand, the lower portion 503 is made of a more ductile material than that of the upper portion 504, i.e. in particular aluminium.

In addition, the assembly 501 comprises a rear suspension attachment structure 505 ("shock tower"), in particular having a function similar to the structure 12. For example, the structure 505 is internally hollow and can be manufactured with the same method described for the structure 12.

The upper portion 504 and the lower portion 503, i.e. the structure 502, are connected and, more particularly, fixed to the structure 505, which is arranged immediately behind the structure 502 according to the travel direction of the motor vehicle 1.

In other words, the structure 502 is arranged between the passenger compartment 200 and the structure 505.

Like the structure 12, the structure 505 also has a plurality of attachments 15, which can be part of the structure 505.

Behind the structure 12, the frame 100 or the assembly 501 further comprises a further crash box, this time a rear crash box, comprising in turn absorption elements 516, 517, 518 with a function and an arrangement with respect to the structure 505 substantially similar to that of the elements 16, 17, 18 with respect to the structure 12.

The elements 516, 517 are fixed with respect to the structure 505 and extend starting from the structure 505 projecting with respect to the structure 505 towards the rear of the motor vehicle 1.

The structure 505 is arranged between the element 516 and the structure 502.

The element 518 comprises or rather is a crossbar, namely a beam, in particular a box-shaped beam, extending transversely and, more precisely, orthogonally to the travel direction of the motor vehicle 1.

The element 518 has two ends fixed to the elements 516, 517, respectively.

To sum up, according to the travel direction of the motor vehicle 1, the frame 100 has in succession, i.e. according to a sequential arrangement: the crash box comprising the elements 16, 17, 18, preferably comprising or made of aluminium; the structure 12 preferably comprising or made of aluminium; the body cell 2 (including the upper portion 504, in particular) preferably comprising or made of carbon fibre; the lower portion 503 preferably comprising or made of aluminium and arranged under the upper portion 504; the structure 505 preferably comprising or made of aluminium; and the crash box comprising the elements 516, 517, 518 preferably comprising or made of aluminium.

Owing to the above, the advantages of the frame 100 according to the invention are evident.

The choice of materials for each of the described components of the frame 100 is optimized to minimize the overall weight of the frame 100 and, hence, of the vehicle 1.

This choice is the result of in-depth research and optimization by the Applicant, including simulations and experiments on the frame 100.

Furthermore, the described manufacturing processes of the components are particularly simple, effective and inexpensive.

The arrangement and materials of the described components of the frame 100 are such as to optimize the overall dimensions, facilitating the installation of devices useful for the operation of the motor vehicle 1.

Furthermore, the frame 100 is extremely durable and safe, despite being lighter than other known frames.

Finally, the frame 100 according to the invention can be subject to changes and variants, which, though, do not go beyond the scope of protection set forth in the appended claims.

In particular, the number and shape of the components described and shown herein could be different.

Furthermore, each described range is to be interpreted as a plurality of alternative individual values. Each individual numerical value within the range is to be considered as specifically described, even if not explicitly mentioned.

Finally, the term "collapsible" is meant in a relative manner with respect to the attachment portion 13, in particular meaning more collapsible than the attachment portion 13, provided that a preferred material for the collapsible portion 20 is a ductile material, such as for example aluminium.

## Claims

1. A frame (100) for a motor vehicle (1), the frame (100) comprising
- a body cell (2) defining a passenger compartment (200) of the motor vehicle (1),
- a front suspension attachment structure (12) comprising an attachment portion (13) fixed to the body cell (2),
- an engine compartment structure (502) fixed relative to the body cell (2) and defining an engine compartment to house an engine for the propulsion of the motor vehicle (1), the engine compartment structure (502) comprising a lower portion (503) for supporting the engine and an upper portion (504) for covering the engine compartment from the top,
- a rear suspension attachment structure (505) fixed to the engine compartment structure (502), the engine compartment structure (502) being arranged between the passenger compartment (200) and the rear suspension attachment structure (505) according to a first straight axis (D),
- one or more attachment elements (15) fixed relative to the front suspension attachment structure (12) and/or to the rear suspension attachment structure (505) and configured to permit a coupling of suspensions (3) of the motor vehicle (1) to the frame (100) in an area for placing the suspensions (3),
- a front absorption element (16) to absorb a front crash of the motor vehicle (1), the front absorption element (16) being distinct from the front suspension attachment structure (12), being fixed relative to the front suspension attachment structure (12) and extending along the first straight axis (D) from the front suspension attachment structure (12) to an end (16a) opposite with respect to the front suspension attachment structure (12), the front suspension attachment structure (12) being arranged between the front absorption element (16) and the body cell (2) according to the first straight axis (D),
- a rear absorption element (516) to absorb a rear crash of the motor vehicle (1), the rear absorption element (516) being distinct from the rear suspension attachment structure (505), being fixed relative to the rear suspension attachment structure (505) and extending along the first straight axis (D) from the rear suspension attachment structure (505), the rear suspension attachment structure (505) being arranged between the rear absorption element (516) and the engine compartment structure (502) according to the first straight axis (D),
wherein
- the front absorption element (16) and the rear absorption element (516) comprise aluminium,
- the front suspension attachment structure (12) and the rear suspension attachment structure (505) comprise aluminium,
- the lower portion (503) comprises aluminium, and
- the upper portion (504) comprises carbon fiber,
wherein the body cell (2) comprises
- at least one shell (310) comprising carbon fiber and at least two first walls (311, 312) facing one another so as to define a cavity (313) between the first walls (311, 312), and
- one or more partitions (324) comprising carbon fiber arranged inside the cavity (313) according to an arrangement and each extending transversally to the first walls (311, 312) between two first ends respectively connected to the first walls (311, 312) seamlessly.

2. The frame according to claim 1, a channel (120) extending with continuity through the front absorption element (16) and the front suspension attachment structure (12) between an inlet opening (121) obtained at said end (16a) along the first straight axis (D) and an outlet opening (122) obtained in the front suspension attachment structure (12) along a fourth axis (H) transversal to the first straight axis (D) towards the area for placing the suspensions (3).

3. The frame according to claim 2, wherein the front suspension attachment structure (12) further comprises a collapsible portion (20) located between the front absorption element (16) and the attachment portion (13) according to the first straight axis (D), the collapsible portion (20) having a first compression stiffness that is equal to or greater than a second compression stiffness of the front absorption element (16) and smaller than a third compression stiffness of the attachment portion (13).

4. The frame according to claim 3, further comprising a steering box (7) comprising a steering tie rod (40) for steering a wheel hub (5) of the motor vehicle (1), a tubular casing (41) extending along a second straight axis (C) and a transmission element coupled to the steering tie rod (40) and to the tubular casing (41) so as to be axially movable along the second straight axis (C) inside the tubular casing (41), wherein the tubular casing (41) is rigidly fixed to the front suspension attachment structure (12).

5. The frame according to claim 4, wherein the collapsible portion (20) has an end (21) according to a third axis (H) orthogonal to the first straight axis (D) and to the second straight axis (C), the end (21) having a recess (22) extending in depth along the third axis (H) and crossed by the steering box (7) along the second straight axis (C).

6. The frame according to claim 5, further comprising an absorber body (24) and releasable fixing means (25) fixing the absorber body (24) to the collapsible portion (20) in a releasable manner at the recess (22).

7. The frame according to claim 6, further comprising
- a crossbar (211) to constitute a support base for a windshield (206) of the motor vehicle (1), and
- a pair of uprights (212) respectively fixed at opposite ends of the crossbar (211) so as to form an area with a closed contour for placing the windshield (206),
wherein the crossbar (211) comprises a first wall (214) facing away from said area with the closed contour,
the frame further comprising a duct (220) extending through the crossbar (211) between a first opening (221) obtained on a second wall (217) of the crossbar (211) and a second opening (222) obtained on the first wall (214), wherein the first wall comprises a concave portion (223), which is concave towards the opposite side with respect to said area with the closed contour, the second opening (222) being obtained on the concave portion (223).

8. A manufacturing method of the frame (100) according to any of the preceding claims, the method comprising the steps of
a. providing a first mould (340) having inner mould walls (343, 344) configured to define said cavity (313),
b. fixing the previously cured partitions (324) to the first mould (340) according to said arrangement inside said cavity (313) and at first inner mould walls (343) of said inner mould walls (343, 344),
c. placing a plurality of raw carbon fibre sheets (358) on second inner mould walls (344) of said inner mould walls (343, 344) in positions adapted to form at least one of said first walls (311, 312), and
d. baking the raw carbon fibre sheets (358) arranged inside the first mould (340) together with the partitions (324) in an autoclave,
e. forming a second sand casting mould (411), which reproduces an internally hollow shape of the front suspension attachment structure (12) or the rear suspension attachment structure (505) and internally contains at least a lost core (412), and
f. feeding, at low pressure, molten metal (414) into the second sand casting mould (411).

9. The method according to claim 8, wherein the partitions (324) are arranged inside the first mould (340) dividing the cavity (313) into a plurality of separate compartments (332).

10. The method according to claim 9, wherein the first mould (340) has a plurality of through openings (361), which respectively establish a connection between the compartments (332) and the outside of the first mould (340), the process further comprising the step of placing respective bags (360) inside the compartments (332) in the first mould (340) so that the bags (360) have respective air inlets (363) on the outside of the first mould (340) through the through openings (361), the air inlets (363) being adapted to allow pressurized air to flow into the bags (360), wherein the first mould (340) contains the bags (360) inside the compartments (332) during step d., so that pressurized air of the autoclave inflates the bags (360) during the baking, thereby pressing the raw carbon fibre sheets (358) against the second inner mould walls (344) during the baking.
